(19) **Europäisches Patentamt / European Patent Office / Office européen des brevets**

(11) **EP 2 862 022 B1**

(12) # FASCICULE DE BREVET EUROPEEN

(45) Date de publication et mention de la délivrance du brevet:
**13.06.2018 Bulletin 2018/24**

(21) Numéro de dépôt: **13728743.9**

(22) Date de dépôt: **13.06.2013**

(51) Int Cl.:
**G02F 1/035** (2006.01)      **G02F 1/065** (2006.01)

(86) Numéro de dépôt international:
**PCT/EP2013/062284**

(87) Numéro de publication internationale:
**WO 2013/186316 (19.12.2013 Gazette 2013/51)**

(54) **COMPOSANT HYPERFRÉQUENCE COMMANDÉ PAR UN SYSTÈME D'ÉLECTRODES COPLANAIRES BLINDÉES, ET PROCÉDÉ DE FABRICATION CORRESPONDANT**

VON EINEM SYSTEM AUS ABGESCHIRMTEN COPLANAREN ELEKTRODEN GESTEUERTE MIKROWELLENFREQUENZKOMPONENTEN UND ZUGEHÖRIGES HERSTELLUNGSVERFAHREN

MICROWAVE FREQUENCY COMPONENT CONTROLLED BY A SYSTEM OF SHIELDED COPLANAR ELECTRODES, AND CORRESPONDING MANUFACTURING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2012 FR 1255545**

(43) Date de publication de la demande:
**22.04.2015 Bulletin 2015/17**

(73) Titulaire: **Universite de Nantes**
**44000 Nantes (FR)**

(72) Inventeurs:
• **EL GIBARI, Mohammed**
  **F-44980 Sainte-Luce-sur-Loire (FR)**
• **TOUTAIN, Serge**
  **F-44300 Nantes (FR)**
• **LI, Hongwu**
  **F-44470 Carquefou (FR)**
• **LUPI, Cyril**
  **F-44300 Nantes (FR)**
• **AVERTY, Dominique**
  **F-44980 Sainte-Luce-sur-Loire (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 1 176 455      EP-A1- 2 006 723**
**EP-A2- 1 079 257      JP-A- 2004 334 098**
**US-A- 5 991 491**

• **EL-GIBARI M ET AL: "Ultra-wideband GCPW-MS transitions for characterising microwave and photonic components based on thin polymer", ELECTRONIC LETTERS, THE INSTITUTION OF ENGINEERING AND TECHNOLOGY, vol. 47, no. 9, 28 avril 2011 (2011-04-28) , pages 553-555, XP006038796, ISSN: 1350-911X, DOI: 10.1049/EL:20103745**
• **EL-GIBARI M ET AL: "Ultra-wideband GCPW-MS-GCPW driven electrode for low-cost and wide range application electro-optic modulators", MICROWAVE AND OPTICAL TECHNOLOGY LETTERS, vol. 52, no. 5, mai 2010 (2010-05), pages 1078-1082, XP002696442, JOHN WILEY & SONS INC. USA ISSN: 0895-2477, DOI: 10.1002/MOP.25112**

EP 2 862 022 B1

Printed by Jouve, 75001 PARIS (FR)

## Description

### 1. DOMAINE DE L'INVENTION

Le domaine de l'invention est celui des composants hyperfréquences.

Plus précisément, l'invention concerne la conception d'un composant hyperfréquence en couche mince commandé par une électrode de commande, et en particulier par une électrode de type microruban.

On entend par « couche mince », dans la suite de ce document, une couche de matériau dont l'épaisseur est généralement inférieure à 100 µm, par opposition aux « couches épaisses » dont l'épaisseur est généralement supérieure à 100 µm.

L'invention s'applique notamment, mais non exclusivement, à des applications et composants tels que par exemple : les modulateurs électro-optiques, les commutateurs électro-optiques, les antennes photoniques à large bande passante, les convertisseurs analogiques-numériques de signaux hyperfréquences par voie optique, les résonateurs et les filtres accordables.

### 2. ARRIÈRE-PLAN TECHNOLOGIQUE

On s'attache plus particulièrement dans la suite de ce document à décrire la problématique existant dans le contexte des modulateurs électro-optiques à très large bande, à laquelle ont été confrontés les inventeurs de la présente demande de brevet. L'invention ne se limite bien sûr pas à ce domaine particulier d'application, mais présente un intérêt pour tout composant hyperfréquence devant faire face à une problématique proche ou similaire.

Les composants opto-hyperfréquences suscitent depuis ces dernières années un intérêt croissant dans les réseaux de communication requérant de larges bandes passantes. En effet, pour répondre à un besoin croissant des utilisateurs pour des applications exigeant de fortes bandes passantes, les réseaux de communication requièrent l'utilisation de composants de modulation électro-optique pour transcrire les signaux électriques hyperfréquences à transmettre en signaux optiques. Ces composants présentent de nombreux avantages, apportant immunité aux perturbations électromagnétiques, faibles pertes de signaux, larges bandes passantes et faible consommation.

Ainsi, à l'heure où l'optique pénètre les réseaux d'accès haut débit, il apparaît intéressant de pouvoir disposer de modulateurs électro-optiques bas coûts, performants et présentant une forte intégration.

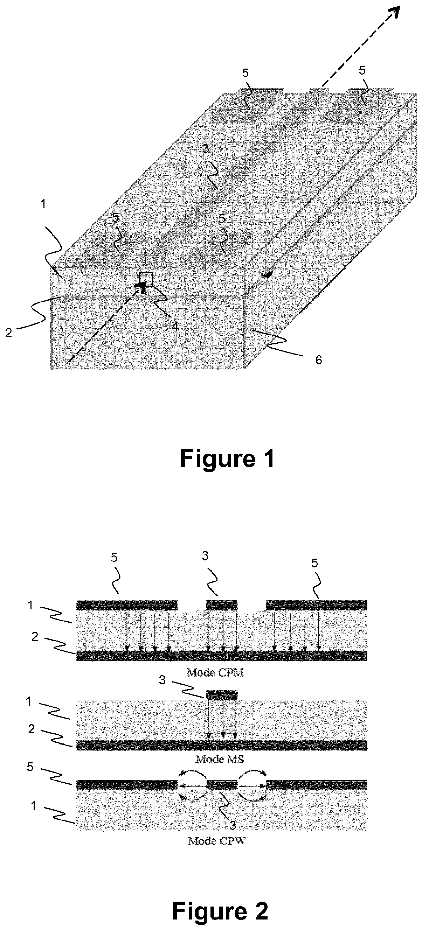

Traditionnellement, un modulateur électro-optique comprend, comme illustré sur la **figure 1,** une couche mince en matériau diélectrique 1 comprise entre un plan de masse 2 (aussi appelé « électrode de masse ») et une électrode de commande microruban 3 (aussi appelée couramment « ligne microruban »). La couche mince 1 inclut un guide d'onde optique formé de matériau électro-optique 4 agencé de manière à guider un signal lumineux à moduler depuis un point d'entrée jusqu'à un point de sortie du modulateur. La ligne microruban 3 placée sur la face supérieure de la couche mince 1 et parallèlement au guide d'onde optique 4 permet d'appliquer un signal électrique de modulation hyperfréquence destiné à moduler le signal lumineux traversant le guide d'onde optique 4. Une modulation en phase et/ou en amplitude du signal lumineux peut être obtenue par effet électro-optique. La couche mince 1, à base de polymères organiques par exemple, comprend des chromophores préalablement orientés. Le champ électrique créé à l'intérieur du matériau électro-optique 4, par la tension électrique appliquée entre l'électrode de commande 3 et le plan de masse 2, modifie localement l'indice de réfraction du matériau électro-optique via l'effet électro-optique recherché.

Toutefois, les modulateurs électro-optiques réalisés en couche mince sont confrontés à un certain nombre d'obstacles quant à leur développement technologique.

Lorsqu'on souhaite connecter un modulateur électro-optique à un connecteur coaxial, il est nécessaire que le rayon extérieur du conducteur du connecteur soit du même ordre de grandeur que l'épaisseur de la couche de matériau formant le substrat 1. Or, en raison de la désadaptation dimensionnelle entre la couche mince 1 (typiquement de l'ordre de 10 µm) et le conducteur du connecteur coaxial (typiquement de l'ordre de plusieurs centaines de micromètres, voire de quelques millimètres), un raccordement direct du modulateur électro-optique au connecteur coaxial est exclu.

Afin d'éviter tout problème de désadaptation dimensionnelle et de faciliter les caractérisations opto-hyperfréquences des modulateurs à l'état non-connecté, on fait classiquement appel à une sonde à pointes coplanaires (de type GSG (pour « Ground Signal Ground») par exemple), nécessitant l'intégration de plots de contacts 5 sur la couche mince 1 du matériau électro-optique. Ces plots de contacts 5 sont disposés de part et d'autre de l'électrode de commande en entrée et en sortie du modulateur, comme illustré sur la figure 1.

Pour amener le signal électrique de modulation via l'électrode de commande 3 et les plots de contacts 5 et l'appliquer au matériau électro-optique de la manière la plus efficace possible, il convient de disposer de transitions assurant un contact électrique virtuel entre les plots 5 et le plan de masse 2, par couplage électromagnétiques grâce à l'effet capacitif entre eux.

On connaît, dans l'état de la technique, différents types de transition pour améliorer la bande passante électrique d'un modulateur électro-optique.

Une première méthode consiste à introduire, dans le substrat diélectrique, entre le plan de masse et les plots de contact, des trous métallisés afin d'assurer un contact physique entre le plan de masse inférieur 2 et les plans de masse supérieurs 5. Toutefois, cette méthode connue est complexe à mettre en oeuvre et inadaptée à la réalisation de composants en couche mince, en particulier lorsque le polymère est réticulé. Quand bien même une telle méthode était adoptée pour la réalisation de composants hyperfréquences en couche mince, la présence de trous métallisés au sein de la structure de propagation générerait des perturbations électromagnétiques, limitant fortement la bande passante électrique du composant.

Une deuxième méthode connue repose sur la réalisation de transitions entre lignes microruban et plots coplanaires par couplage électromagnétique entre le plan de masse inférieur et les plans de masse supérieurs. Dans une telle structure, lorsqu'un signal de modulation hyperfréquence est appliqué entre les plots de contact et l'électrode de commande, trois modes de propagation électromagnétiques peuvent se propager au sein du matériau électro-optique. Ces trois modes de propagation sont illustrés plus en détail sur la **figure 2** : le mode microruban (noté « MS » sur la figure), le mode coplanaire (noté « CPW ») et le mode microruban - coplanaire (noté « CPM »). Or il a été démontré que l'utilisation de plots de contact dans une structure de propagation de type microruban conduit à exciter fortement le mode de propagation CPM, source d'apparition de pics de résonance qui limitent la bande passante électrique du composant. En outre, une telle méthode n'assure pas le passage du courant continu. Le document US5991491 décrit un modulateur électrique hyperfréquence utilisant des électrodes coplanaires et une couche diélectrique sous les électrodes. M. El-Gibari ("Ultra-wideband GCPW-MS transitions for characterising microwave and photonic components based on thin polymer", Electronic Letters, 28th of April 2011, vol.47, issue n°9) précise plus en détail les caractéristiques des électrodes coplanaires d'un composant photonique hyperfréquence.

## 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant d'obtenir un composant hyperfréquence en couche mince qui présente une large bande passante électrique.

Au moins un mode de réalisation de l'invention a également pour objectif de fournir un composant hyperfréquence qui respecte les conditions d'adaptation en impédance.

Un objectif complémentaire d'au moins un mode de réalisation de l'invention est de fournir une telle technique qui soit simple et peu coûteuse à mettre en oeuvre.

## 4. EXPOSÉ DE L'INVENTION

Dans un mode de réalisation particulier de l'invention, il est proposé un composant hyperfréquence tel que décrit dans la revendication 1. Ainsi, en disposant d'un tel agencement d'électrodes coplanaires sur la couche du matériau diélectrique formée d'au moins une couche mince, les inventeurs ont observé qu'un signal électrique hyperfréquence appliqué au composant hyperfréquence induit dans la couche mince un champ électromagnétique qui se confine en dessous et sur toute la longueur de l'électrode de commande. Il a été observé en effet qu'en conjuguant les caractéristiques spécifiques aux couches minces et l'utilisation d'électrodes coplanaires telles que définies ci-dessus, dites électrodes coplanaires « blindées », le mode de propagation électromagnétique qui s'impose au sein du matériau diélectrique est celui associé à l'électrode de commande recherché. Cela signifie qu'une continuité électrique entre les électrodes coplanaires et l'électrode de commande est assurée, en même temps qu'une large bande passante. Les électrodes coplanaires blindées peuvent donc être utilisées pour assurer la fonctionnalité de l'électrode de commande. En d'autres termes, selon l'invention, les électrodes coplanaires blindées se comportent comme une électrode de commande.

Le terme « blindées » signifie que les électrodes coplanaires sont associées à l'électrode de masse du composant, autrement dit, que les électrodes coplanaires sont à plan de masse inférieure.

Ainsi, contrairement aux structures de propagation hyperfréquence de l'art antérieur, le composant hyperfréquence selon l'invention permet d'une part d'assurer la continuité du signal électrique notamment en basse fréquence et d'autre part de s'affranchir du phénomène de perturbations électromagnétiques dû à la présence des plots de contact. Ceci est d'autant plus surprenant que, pour l'Homme du Métier, le fait d'utiliser des électrodes coplanaires s'étendant tout le long de l'électrode commande aurait dû accroître ce phénomène de perturbations électromagnétiques par l'excitation de modes d'ordre supérieure.

Par ailleurs, les bandes passantes observées pour les transitions entre les électrodes coplanaires et l'électrode de commande dans le cadre de l'invention permettent d'envisager des applications industrielles de l'utilisation d'un tel composant hyperfréquence en couche mince.

Enfin, le fait d'équiper un composant hyperfréquence d'un tel agencement d'électrodes coplanaires permet d'obtenir de façon relativement simple et peu coûteuse un composant hyperfréquence en couche mince présentant une bande passante électrique étendue.

De manière particulièrement avantageuse, l'électrode de commande est une électrode de type microruban.

L'électrode microruban, parfois appelée ligne microruban, est particulièrement simple et peu coûteuse à mettre en oeuvre. Les électrodes coplanaires blindées peuvent donc être utilisées pour assurer la fonctionnalité d'une électrode microruban. En d'autres termes, les électrodes coplanaires blindées selon l'invention se comportent sensiblement comme une électrode microruban.

Selon une caractéristique avantageuse, la distance G entre l'électrode de commande et chacune desdites électrodes coplanaires, et l'épaisseur h de la couche de matériau diélectrique satisfont l'inégalité suivante : $1,2 \leq G/h < 2$

En tirant parti des caractéristiques spécifiques des couches minces, on facilite davantage la conversion du champ électromagnétique entre le mode coplanaire et le mode microruban, ce qui permet d'imposer un confinement du champ électromagnétique dans le matériau diélectrique localisé sous l'électrode microruban.

De manière particulièrement avantageuse, la distance G séparant l'électrode de commande de chacune desdites électrodes coplanaires satisfait l'expression suivante : $G = 1,4*h-1$

La largeur W et la distance G sont déterminées de façon à obtenir une adaptation d'impédance caractéristique d'entrée ou de sortie du composant de l'ordre de 50 $\Omega$.

De manière particulièrement avantageuse, les électrodes coplanaires ont chacune une largeur $W_g$ inférieure à 5 mm, de préférence inférieure à 2 mm, et plus préférentiellement inférieure à 500 $\mu$m.

De manière préférentielle, le matériau diélectrique a une constante diélectrique inférieure à 7, de préférence inférieure à 5, et plus préférentiellement inférieure à 3.

De manière particulièrement avantageuse, le matériau diélectrique est un matériau à effet électro-optique appartenant au groupe comprenant : matériau semi-conducteur, matériau inorganique, matériau organique, matériau hybride organique-inorganique.

L'invention peut donc s'appliquer plus spécifiquement aux composants présentant des fonctionnalités optoélectroniques.

Le champ électrique créé à l'intérieur du matériau électro-optique au moyen dudit ensemble d'au moins deux électrodes coplanaires impose une variation d'indice de réfraction optique de façon à générer une modulation électro-optique efficace ciblée sous l'électrode de commande.

Selon une caractéristique avantageuse, la couche de matériau diélectrique comprend un guide d'onde optique enterré.

De façon particulièrement avantageuse, le guide d'onde optique enterré s'étend parallèlement à l'électrode de commande.

On peut donc mettre en oeuvre une modulation électro-optique d'un rayonnement lumineux se propageant dans le guide d'onde.

Dans un autre mode de réalisation particulier de l'invention, il est proposé un procédé de fabrication d'un composant hyperfréquence tel que décrit dans la revendication 9. Par exemple, la fabrication d'un composant de modulation électro-optique peut nécessiter le dépôt de trois couches minces successives de matériaux diélectriques (une première couche destinée à constituer la couche dite tampon de la gaine optique, la deuxième destinée à constituer la couche dite guide d'onde (ou coeur) optique, la troisième destinée à constituer la couche dite de recouvrement de la gaine optique.

L'étape d'obtention d'une électrode de commande et d'au moins deux électrodes coplanaires peut être réalisée :

- par une technique combinant un dépôt sous vide du matériau conducteur électrique par évaporation thermique ou pulvérisation cathodique, un dépôt de résine photosensible, une étape d'insolation et de développement de la résine suivie d'une gravure chimique ou ionique du matériau électrique (procédé connu sous le nom de « Lift On »), ou

- par une technique combinant un dépôt de résine photosensible, une étape d'insolation et de développement de la résine suivi du dépôt sous vide du matériau conducteur électrique par évaporation thermique ou pulvérisation cathodique. La structure finale sera obtenue lors du retrait de l'ensemble de la résine (procédé connu selon le nom « Lift-Off »).

## 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1, déjà décrite en relation avec l'art antérieur, présente la structure d'un composant de modulation électro-optique connu de l'état de la technique ;
- la figure 2, déjà décrite en relation avec l'art antérieur, présente trois configurations de modes de champ électromagnétique se propageant dans le modulateur électro-optique de la figure 1 ;
- la figure 3 présente un exemple de structure d'un composant hyperfréquence selon un mode de réalisation particulier de l'invention ;
- la figure 4 une simulation de la distribution du champ électromagnétique apparaissant dans le plan transverse A-A du composant hyperfréquence illustré sur la figure 3 ;
- les figures 5a et 5b représentent graphiquement l'évolution des coefficients de transmission et de réflexion expérimentaux d'un composant hyperfréquence obtenu selon un premier exemple conforme à l'invention d'une part, et d'autre part d'un composant hyperfréquence connu de l'état de la technique ;
- les figures 6a et 6b représentent graphiquement l'évolution des coefficients de transmission et de réflexion expérimentaux d'un composant hyperfréquence obtenu selon un deuxième exemple conforme à l'invention.

## 6. DESCRIPTION DÉTAILLÉE

Sur toutes les figures du présent document, les éléments et étapes identiques sont désignés par une même référence numérique.

Comme discuté précédemment, le principe de l'invention repose sur l'utilisation astucieuse d'un ensemble d'au moins deux électrodes coplanaires agencées de part et d'autre et à égale distance d'une électrode de commande, de type microruban par exemple, d'un composant hyperfréquence en couche mince, et s'étendant tout le long de cette électrode de commande, pour assurer la fonctionnalité de l'électrode de commande.

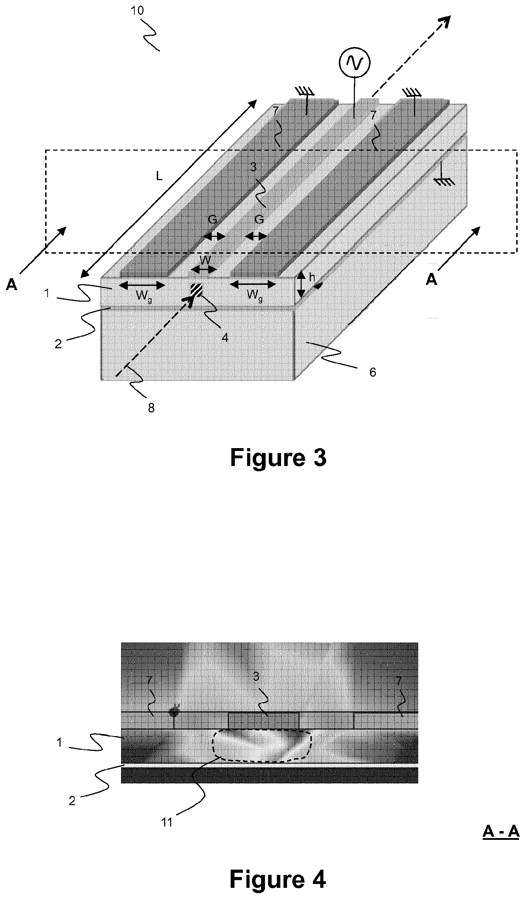

La **figure 3** présente un exemple de structure d'un composant hyperfréquence 10 selon un mode de réalisation particulier de l'invention.

Le composant hyperfréquence 10 représenté sur cette figure est un composant de modulation électro-optique à base de polymère. Il comprend plus particulièrement :

- un substrat 6 en silicium ;
- une électrode de masse ou plan de masse métallique inférieur 2, disposé sur toute la surface du substrat 6 ;
- une couche mince 1 de matériau diélectrique, tel qu'un matériau polymère de type BCB (pour « benzocyclobutène ») par exemple, disposée sur toute la surface de l'électrode de masse 2 ;
- un guide d'onde optique enterré 4, destiné à guider un signal optique 8 à moduler depuis un point d'entrée jusqu'à un point de sortie du modulateur (transcription des signaux hyperfréquences en signaux optiques) ;
- une électrode de commande centrale 3, de type microruban (aussi appelée « ligne microruban »), s'étendant sur une partie de la largeur de la face supérieure de la couche mince 1 et tout le long du guide d'onde optique 4 ;
- un ensemble de deux électrodes coplanaires 7 (aussi appelée « lignes coplanaires ») disposées de part et d'autre et à égale distance de l'électrode de commande 3 et s'étendant tout le long de cette électrode 3. Les deux électrodes coplanaires 7 jouent le rôle de plans de masse supérieurs.

Dans cet exemple, la couche mince 1 remplit la fonction de guide d'onde électrique, et a une épaisseur h de l'ordre de 20 $\mu$m et une permittivité relative $\varepsilon_r$ de l'ordre de 2,9. L'électrode microruban 3 a une largeur W de l'ordre de 52 $\mu$m et une longueur de l'ordre de 1 cm. Chaque électrode coplanaire 7 possède une largeur $W_g$ de l'ordre de 1 mm et une longueur de 1 cm. La distance G entre l'électrode microruban 3 et chacune des deux électrodes coplanaires 7 (appelée par la suite « distance inter-électrodes) est égale à environ 33 $\mu$m.

Il convient de noter que ces dimensions sont données à titre purement illustratif et peuvent bien entendu être différentes.

La couche 1 de matériau diélectrique illustré ici peut être constituée, en pratique, d'une ou plusieurs couches minces successives. Dans le présent cas d'espèce, la couche 1 de matériau diélectrique est formée de trois couches minces de matériaux diélectriques : une première couche (couramment appelée « tampon ») formant une partie de la gaine optique, la deuxième destinée à constituer le guide d'onde optique enterré, la troisième (couramment appelée « recouvrement ») formant l'autre partie de la gaine optique. A des fins de simplification de la description, on assimilera par abus de langage le terme « couche mince » à un ensemble de couches minces constituant la couche de matériau diélectrique 1.

De manière générale, les dimensions des électrodes coplanaires 7 et leur agencement par rapport à l'électrode microruban 3 peuvent être optimisées de façon à ce que le modulateur électro-optique puisse bénéficier d'une large bande passante électrique.

Selon un mode de réalisation particulier, la distance inter-électrodes G et l'épaisseur h de la couche mince 1 sont déterminées de façon à satisfaire l'inégalité suivante :

$$1{,}2 \leq G/h < 2 \qquad (1)$$

Cette inégalité empirique permet d'obtenir un modulateur électro-optique commandé par un ensemble d'électrodes coplanaires à plan de masse inférieure et présentant une large bande passante. En effet, dans le cadre d'expérimentations réalisées sur des structures hyperfréquences en couches minces, les inventeurs ont mis en évidence que lorsque le rapport entre la distance inter-électrodes G et l'épaisseur h de la couche mince 1 appartient à la plage de valeurs (1) ci-dessus, l'excitation du mode de propagation MS est favorisée au coeur de la couche mince 1 et le champ électromagnétique est alors confiné principalement sous l'électrode microruban 3, ce qui garantit une efficacité d'interaction électro-optique optimale au niveau du guide d'onde optique 4.

Ce phénomène physique est particulièrement bien illustré sur la **figure 4** qui montre sous forme d'une simulation la distribution du champ électromagnétique apparaissant dans le plan transverse A-A du modulateur 10. En effet, on observe sur cette figure, en particulier au niveau de la zone en pointillés référencée 11, que la majeure partie du champ électromagnétique induit dans la couche mince 1 se confine sous la ligne microruban 3. Le mode de propagation voit la portion de l'électrode de masse 2 correspondant au plan de masse de l'électrode microruban, facilitant la conversion du champ électromagnétique coplanaire-microruban. En d'autres termes, cette figure montre bien le confinement de l'énergie sous la ligne centrale microruban 3, montrant ainsi la propagation du mode microruban souhaité.

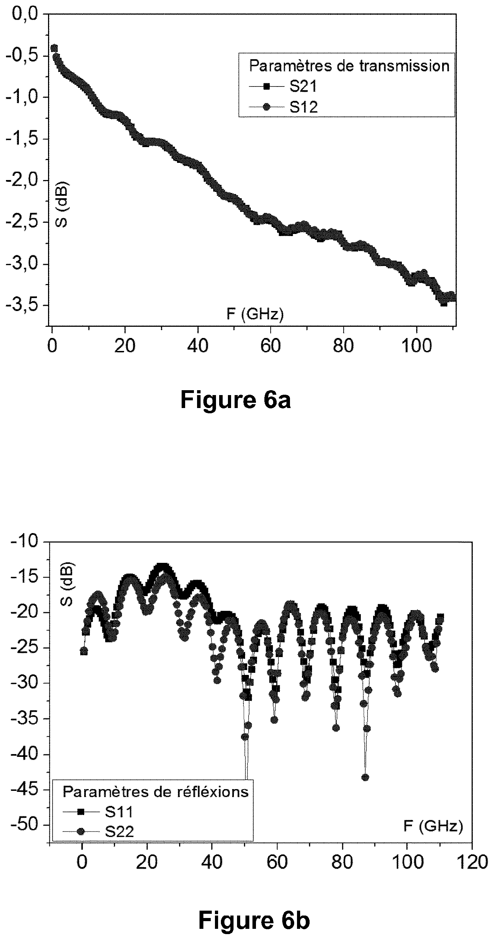

Le mode de propagation CPM fortement présent dans les modulateurs électro-optiques de l'état de la technique n'est plus excité dans le modulateur de l'invention. L'utilisation d'un ensemble d'électrodes coplanaires à plan de masse inférieur et d'une structure de propagation en couche mince permet d'inhiber les effets non désirés d'excitation du mode de propagation CPM ; la fonction d'une ligne microruban avec une bande passante accrue peut donc être assurée. Un exemple de caractéristiques électriques obtenues avec le composant hyperfréquence selon l'invention est présenté plus loin en relation avec les figures 6a et 6b.

Les conditions à satisfaire pour réaliser un modulateur électro-optique bénéficiant d'une large bande passante électrique selon l'invention peuvent être résumées de la façon suivante.

On détermine tout d'abord la largeur W de l'électrode microruban afin d'avoir une adaptation d'impédance caractéristique de l'ordre de 50 Ω (avec un générateur en entrée ou avec une charge en sortie), à partir de la relation suivante : W = 2,5*h - 2. Cette relation permet de fixer une largeur W optimisant le transfert d'énergie avec l'électrode microruban.

On détermine ensuite la distance inter-électrodes G à partir de la relation suivante : G = 1,4*h - 1, tout en respectant l'inégalité (1) décrite ci-dessus.

Il convient de noter que les dimensions géométriques du composant, telles que la largeur W et la distance G, sont des caractéristiques que l'Homme du Métier est à même de définir en fonction de la valeur d'impédance caractéristique souhaitée.

On fixe ensuite la largeur $W_g$ des deux électrodes coplanaires en considérant qu'elle doit être inférieure à 2 mm ($W_g \leq 2mm$). En effet, il a été observé que la bande passante est d'autant plus large que la largeur $W_g$ des électrodes coplanaires est faible.

La permittivité relative, appelée aussi constante diélectrique, du matériau électro-optique $\varepsilon_r$ est également un paramètre à prendre en considération, la bande passante étant d'autant plus large que la valeur de la permittivité relative est faible. Ainsi on fixe la permittivité relative inférieure à 7 ($\varepsilon_r < 7$).

La longueur L des électrodes microruban 3 et coplanaires 7 est définie de façon à correspondre à la longueur d'interaction de l'onde électrique avec l'onde optique du modulateur.

Le composant hyperfréquence peut alors être connecté à un connecteur coaxial classique. Comme illustré sur la figure 3, le plan de masse 2 et les électrodes coplanaires 7 sont destinées à être connectées à la masse électrique. L'électrode de commande microruban 3 quant à elle est destinée à l'application d'un signal électrique de modulation hyperfréquence. Pour mémoire, ce signal hyperfréquence permet de moduler le signal lumineux traversant le guide d'onde optique 4. Un tel agencement des électrodes coplanaires blindées avec l'électrode de commande microruban permet ainsi d'assurer les fonctionnalités de l'électrode de commande avec une bande passante accrue.

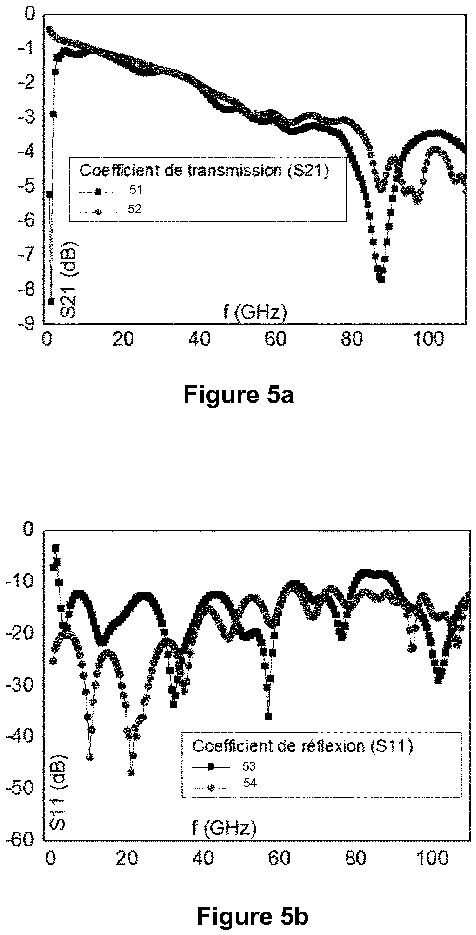

Les **figures 5a et 5b** représentent graphiquement l'évolution des coefficients de transmission S21 et de réflexion S11 mesurés pour un composant hyperfréquence selon un premier exemple conforme à l'invention d'une part, et pour un composant hyperfréquence connu de l'état de la technique d'autre part.

Les dimensions structurelles de ces deux structures sont de l'ordre de : W = 48 $\mu$m, G = 28 $\mu$m, $W_g$ = 1mm, h = 20 $\mu$m et L = 1 cm. Les structures sont réalisées sur le polymère BCB ($\varepsilon_r$ = 2,9).

D'une manière générale, les coefficients de transmission S21 et de réflexion S11 traduisent le comportement à la transmission et à la réflexion d'ondes se propageant dans une structure de propagation.

S'agissant de la figure 5a, les courbes référencées 51 et 52 correspondent à l'évolution du coefficient de transmission S21 mesuré respectivement pour le composant hyperfréquence connu présenté plus haut en relation avec l'état de la technique et pour un composant hyperfréquence conforme à l'invention. Les courbes 51 et 52 sont représentées sur une bande de fréquences comprise entre 0 et 110 GHz. L'excitation du mode de propagation CPM est à l'origine du pic de résonance qui apparaît sur la courbe 51 à environ 88 GHz pour le composant hyperfréquence connu de l'état de la technique. Contrairement à ce dernier, le composant hyperfréquence réalisé dans le cadre de l'invention présente un pic de résonance bien moins important, d'où une augmentation de la bande passante. En outre, on constate sur ce graphique que la limite basse de la bande passante (fréquence de coupure) apparaît aux alentours de 5 GHz pour la courbe 51, alors que celle de la courbe 52 n'apparait pas. On observe donc une continuité du signal électrique dans les basses fréquences.

S'agissant de la figure 5b, les courbes référencées 53 et 54 correspondent à l'évolution du coefficient de réflexion S11 obtenu respectivement pour le composant connu de l'état de la technique et par un composant hyperfréquence conforme à l'invention, pour une bande de fréquences comprise entre 0 et 110 GHz. On rappelle à ce titre que la qualité d'adaptation de l'antenne en bande passante est fonction du niveau du coefficient de réflexion. On constate sur ce graphique que le niveau du coefficient de réflexion S11 de la courbe 54 est inférieur à -10 dB dès les basses fréquences et est globalement situé en dessous de la courbe 53. Cela signifie que le composant selon l'invention présente globalement une bonne adaptation sur une bande de fréquences comprises entre 1 et 110 GHz.

Les **figures 6a et 6b** représentent graphiquement l'évolution des coefficients de transmission (S21, S12) et de réflexion (S11, S22) mesurés pour un composant hyperfréquence selon un deuxième exemple conforme à l'invention.

Les dimensions structurelles retenues dans cet exemple sont celles décrites plus haut en relation avec la figure 3.

Sur la figure 6a, on observe par ailleurs que ces deux courbes ne présentent aucune discontinuité en basse fréquence et aucun pic de résonance, contrairement à l'état de la technique. Les inventeurs ont mis en évidence que la disparition de la limite basse de la bande passante est liée à la présence des électrodes coplanaires. En effet, l'agencement des électrodes coplanaires combiné aux caractéristiques de la couche mince 1 du matériau électro-optique permet de faire tendre l'effet capacitif vers l'infini entre les plans de masse supérieurs 7 et le plan de masse inférieur 2. De plus, elles permettent de s'affranchir des pertes liées à l'apparition des pics de résonances limitant la bande passante. La bande passante expérimentale obtenue ici pour le composant hyperfréquence est supérieure à 90GHz.

Sur la figure 6b, on observe une très bonne adaptation pour les coefficients de réflexion S11 et S22, ceux-ci étant inférieur à -15dB sur l'ensemble de la bande de fréquence étudiée, ce qui permet d'assurer un transfert d'énergie électrique optimal.

Enfin, on décrit ci-après les étapes principales du procédé de fabrication d'un composant hyperfréquence selon un mode de réalisation particulier de l'invention. On procède tout d'abord au dépôt, sur une plaque de substrat (wafer de silicium par exemple), d'une couche d'un matériau métallique constituant une électrode de masse. Ce dépôt peut être réalisé typiquement au moyen d'une technique de dépôt par évaporation sous vide. Puis on procède, par enduction centrifuge (« spin-coating » en anglais) par exemple, au dépôt d'une couche mince de matériau diélectrique, à effet électro-optique par exemple, sur l'électrode de masse. Cette couche de matériau diélectrique est formée plus précisément de trois couches minces : une première couche formant une partie de la gaine optique, une deuxième couche qui, après gravure, permet de former le guide d'onde optique enterré, et une troisième couche formant l'autre partie de la gaine optique. Enfin, on procède à la réalisation, sur la couche du matériau diélectrique (c'est-à-dire la couche constituant la gaine optique) :

- d'une électrode de commande qui s'étend longitudinalement sur la couche de matériau diélectrique, et
- de deux électrodes coplanaires s'étendant le long de l'électrode de commande, de part et d'autre et à égale distance de l'électrode de commande.

Cette dernière étape peut être réalisée au moyen d'une technique de dépôt par évaporation sous vide, suivie d'une gravure chimique. D'autres techniques permettant de réaliser les électrodes coplanaires et l'électrode de commande sont bien sûr possibles, sans sortir du cadre de l'invention.

Le composant hyperfréquence décrit ci-dessus est destiné aux circuits intégrés électro-optiques. Il est clair toutefois qu'il peut aisément être adapté à de nombreuses autres applications, sans sortir du cadre de l'invention. En particulier, le composant hyperfréquence selon l'invention peut être adapté aux circuits intégrés électroniques ne comprenant pas de guide d'onde optique, mais seulement un guide d'onde électrique (couche mince diélectrique). L'invention s'applique en effet indépendamment du fait que la couche mince de matériau diélectrique est destinée ou non à la transcription de signaux électriques hyperfréquences à transmettre en signaux optiques. Plus généralement, l'invention peut s'appliquer à tout composant comprenant une couche de matériau diélectrique formée d'au moins une couche mince, et commandé par une électrode de commande d'un signal électrique hyperfréquence.

## Revendications

1. Composant hyperfréquence de type modulateur électro-optique comprenant une couche de matériau diélectrique (1), formée d'au moins une couche mince, agencée entre une électrode de masse (2) et une électrode de commande (3) d'un signal électrique hyperfréquence de sorte que :

   - l'électrode de masse (2) s'étend sur une première face, dite face inférieure, de la couche de matériau diélectrique (1),
   - l'électrode de commande (3) s'étend longitudinalement sur une deuxième face, dite face supérieure, de la couche de matériau diélectrique (1),

   le composant hyperfréquence comprenant un ensemble d'au moins deux électrodes coplanaires (7) s'étendant tout le long de l'électrode de commande (3), de part et d'autre et à égale distance de l'électrode de commande (3), **caractérisé en ce que** la largeur W exprimée en $\mu$m de l'électrode de commande, et l'épaisseur h exprimée en $\mu$m de la couche de matériau diélectrique satisfont l'égalité suivante : W = 2,5*h - 2, l'épaisseur h étant inférieure à 100$\mu$m.

2. Composant hyperfréquence selon la revendication 1, dans lequel l'électrode de commande est une électrode de type microruban.

3. Composant hyperfréquence selon la revendication 2, dans lequel la distance G séparant l'électrode de commande de chacune desdites électrodes coplanaires satisfait l'expression suivante : G = 1,4*h - 1

4. Composant hyperfréquence selon l'une quelconque des revendications 1 à 3, dans lequel les électrodes coplanaires ont chacune une largeur $W_g$ inférieure à 5 mm, de préférence inférieure à 2 mm, et plus préférentiellement inférieure à 500 $\mu$m.

5. Composant hyperfréquence selon l'une quelconque des revendications 1 à 4, dans lequel le matériau diélectrique a une constante diélectrique inférieure à 7, de préférence inférieure à 5, et plus préférentiellement inférieure à 3.

6. Composant hyperfréquence selon l'une quelconque des revendications 1 à 5, dans lequel le matériau diélectrique est un matériau à effet électro-optique appartenant au groupe comprenant : matériau semi-conducteur, matériau inorganique, matériau organique, matériau hybride organique-inorganique.

7. Composant hyperfréquence selon la revendication 6, dans lequel la couche de matériau diélectrique comprend un guide d'onde optique enterré.

8. Composant hyperfréquence selon la revendication 7, dans lequel le guide d'onde optique enterré s'étend parallèlement à l'électrode de commande.

9. Procédé de fabrication d'un composant hyperfréquence de type modulateur électro-optique comprenant les étapes suivantes :

    - déposer, sur une plaque de substrat, une couche d'un matériau électrique ;
    - déposer, sur ladite couche de matériau électrique, une couche de matériau diélectrique formée d'au moins une couche mince ;
    - obtenir, sur ladite couche de matériau diélectrique :

        * une électrode de commande qui s'étend longitudinalement sur la couche de matériau diélectrique, et
        * un ensemble d'au moins deux électrodes coplanaires s'étendant le long de l'électrode de commande, de part et d'autre et à égale distance de l'électrode de commande, **caractérisé en ce que** la largeur W exprimée en $\mu$m de l'électrode de commande, et l'épaisseur h exprimée en $\mu$m de la couche de matériau diélectrique satisfont l'égalité suivante : W = 2,5*h - 2, l'épaisseur h étant inférieure à 100$\mu$m.

**Patentansprüche**

1. Mikrowellenfrequenzkomponente vom Typ des elektrooptischen Modulators, umfassend eine Schicht aus dielektrischem Material (1), die aus mindestens einer Dünnschicht gebildet ist, die zwischen einer Masseelektrode (2) und einer Steuerelektrode (3) eines elektrischen Mikrowellenfrequenzsignals derart angeordnet ist, dass:

    - sich die Masseelektrode (2) auf einer ersten Seite, der sogenannten Unterseite, der Schicht aus dielektrischem Material (1) erstreckt,

    - sich die Steuerelektrode (3) in Längsrichtung auf einer zweiten Seite, der sogenannten Oberseite, der Schicht aus dielektrischem Material (1) erstreckt,

wobei die Mikrowellenfrequenzkomponente eine Anordnung von mindestens zwei coplanaren Elektroden (7) aufweist, die sich entlang der Steuerelektrode (3) beiderseits und im gleichen Abstand von der Steuerelektrode (3) erstrecken, **dadurch gekennzeichnet, dass** die Breite W, ausgedrückt in $\mu$m, der Steuerelektrode und die Dicke h, ausgedrückt in $\mu$m, der Schicht aus dielektrischem Material die folgende Gleichung erfüllen: W = 2,5*h - 2, wobei die Dicke h niedriger als 100 $\mu$m ist.

2. Mikrowellenfrequenzkomponente nach Anspruch 1, wobei die Steuerelektrode eine Elektrode des Typs der Mikrostreifenelektrode ist.

3. Mikrowellenfrequenzkomponente nach Anspruch 2, wobei der Abstand G, der die Steuerelektrode von jeder der coplanaren Elektroden trennt, die folgende Gleichung erfüllt: G = 1,4*h - 1.

4. Mikrowellenfrequenzkomponente nach einem der Ansprüche 1 bis 3, wobei die coplanaren Elektroden jeweils eine Breite $W_g$ von weniger als 5 mm, vorzugsweise von weniger als 2 mm und insbesondere von weniger als 500 $\mu$m aufweisen.

5. Mikrowellenfrequenzkomponente nach einem der Ansprüche 1 bis 4, wobei das dielektrische Material eine Dielektrizitätskonstante von unter 7, vorzugsweise von unter 5 und insbesondere von unter 3 aufweist.

6. Mikrowellenfrequenzkomponente nach einem der Ansprüche 1 bis 5, wobei das dielektrische Material ein Material mit elektrooptischem Effekt ist, das zu der Gruppe gehört, umfassend: Halbleitermaterial, anorganisches Material, organisches Material, organisch-anorganisches Hybridmaterial.

7. Mikrowellenfrequenzkomponente nach Anspruch 6, wobei die Schicht aus dielektrischem Material einen eingebetteten optischen Wellenleiter aufweist.

8. Mikrowellenfrequenzkomponente nach Anspruch 7, wobei sich der eingebettete optische Wellenleiter parallel zu der Steuerelektrode erstreckt.

9. Verfahren zur Herstellung einer Mikrowellenfrequenzkomponente vom Typ des elektrooptischen Modulators, das die folgenden Schritte aufweist:

    - Aufbringen einer Schicht aus einem elektrischen Material auf einer Substratplatte;

- Aufbringen auf der Schicht aus elektrischem Material einer Schicht aus dielektrischem Material, die aus mindestens einer Dünnschicht gebildet ist;
- Erhalten auf der Schicht aus dielektrischem Material:

   * einer Steuerelektrode, die sich in Längsrichtung auf der Schicht aus dielektrischem Material erstreckt, und
   * einer Anordnung von mindestens zwei coplanaren Elektroden, die sich entlang der Steuerelektrode beiderseits und im gleichen Abstand von der Steuerelektrode erstrecken,

**dadurch gekennzeichnet, dass** die Breite W, ausgedrückt in $\mu$m, der Steuerelektrode und die Dicke h, ausgedrückt in $\mu$m, der Schicht aus dielektrischem Material die folgende Gleichung erfüllen: W = 2,5*h - 2, wobei die Dicke h niedriger als 100 $\mu$m ist.

**Claims**

1. Microwave frequency component of the electro-optical modulator type comprising a layer of dielectric material (1), formed by at least one thin layer, laid out between a ground electrode (2) and a control electrode (3) for controlling a microwave frequency electrical signal, such that:

   - the ground electrode (2) extends on a first face, called a lower face, of the layer of dielectric material (1),
   - the control electrode extends longitudinally on a second face, called an upper face, of the layer of dielectric material (1),

   the microwave frequency component comprising a set of at least two coplanar electrodes (7) extending all along the control electrode (3) on either side of and at equal distance from the control electrode (3), **characterized in that** the width W in $\mu$m of the control electrode and the thickness h in $\mu$m of the layer of dielectric material satisfy the following equality: W = 2.5*h - 2, the thickness h being below 100 $\mu$m.

2. Microwave frequency component according to claim 1, wherein the control electrode is a microstrip type electrode.

3. Microwave frequency component according to claim 2, wherein the distance G between the control electrode of each of said coplanar electrodes satisfies the following expression: G = 1.4*h - 1.

4. Microwave frequency component according to any one of the claims 1 to 3, wherein the coplanar electrodes each have a width $W_g$ below 5 mm, preferably below 2 mm, and more preferably below 500 $\mu$m.

5. Microwave frequency component according to any one of the claims 1 to 4, wherein the dielectric material has a dielectric constant below 7, preferably below 5 and more preferably below 3.

6. Microwave frequency component according to any one of the claims 1 to 5, wherein the dielectric material is a material with electro-optical effect belonging to the group comprising: semi-conductor material, inorganic material, organic material, hybrid organic-inorganic material.

7. Microwave frequency component according to claim 6, wherein the layer of dielectric material comprises a buried optical waveguide.

8. Microwave frequency component according to claim 7, wherein the buried optical waveguide extends in parallel to the control electrode.

9. Method for manufacturing a microwave frequency component of the electro-optical modulator type comprising the following steps:

   - depositing a layer of an electrical conductive material on a substrate wafer;
   - depositing a layer of dielectric material, formed by at least one thin layer, on said layer of electrical conductive material;
   - obtaining, on said layer of dielectric material:

      * a control electrode which extends longitudinally on the layer of the dielectric material, and
      * a set of at least two coplanar electrodes extending along the control electrode on either side and at equal distance from the control electrode **characterized in that** the width W in $\mu$m of the control electrode, and the thickness h in $\mu$m of the layer of dielectric material satisfy the following equality: W = 2.5*h - 2, the thickness h being below 100 $\mu$m.

**Figure 1**

Mode CPM

Mode MS

Mode CPW

**Figure 2**

# Figure 3

A - A

# Figure 4

**Figure 5a**

**Figure 5b**

**Figure 6a**

**Figure 6b**

## RÉFÉRENCES CITÉES DANS LA DESCRIPTION

**Documents brevets cités dans la description**

- US 5991491 A

**Littérature non-brevet citée dans la description**

- **M. EL-GIBARI.** Ultra-wideband GCPW-MS transitions for characterising microwave and photonic components based on thin polymer. *Electronic Letters,* 28 Avril 2011, vol. 47 (9